# EUROPÄISCHE PATENTSCHRIFT

(11) **EP 1 917 162 B1**
(45) Veröffentlichungstag und Bekanntmachung des Hinweises auf die Patenterteilung: **07.04.2010**
(21) Anmeldenummer: 06761281.2
(22) Anmeldetag: 14.08.2006
(51) Int. Cl.: B60P 3/22, B65D 90/10, B65D 90/58

(54) **SCHLIESSEINRICHTUNG FÜR AN EINEM BEHÄLTER ANGEORDNETE EINFÜLLSTUTZEN**
CLOSING DEVICE FOR A FILLER NECK DISPOSED ON A CONTAINER
DISPOSITIF DE FERMETURE POUR UNE TUBULURE DE REMPLISSAGE SITUEE SUR UNE CUVE

(30) Priorität: 23.08.2005 CH 13752005; 01.12.2005 CH 19082005
(43) Veröffentlichungstag der Anmeldung: 07.05.2008
(73) Patentinhaber: Stag AG, CH-7304 Maienfeld (CH)
(72) Erfinder: GLOOR, Christian, 9475 Sevelen (CH); MEIER, Hubert, 5512 Wohlenschwil (CH); FURGLER, Walter, 8887 Mels (CH); PIETH, Daniel, 7026 Maladers (CH); MOSBERGER, Ekkehard, 7304 Maienfeld (CH)
(74) Vertreter: Spierenburg, Pieter
(86) Internationale Anmeldenummer: PCT/CH2006/000430
(87) Internationale Veröffentlichungsnummer: WO 2007/022652

(56) Entgegenhaltungen:
- WO-A-02/074581
- US-A1- 2005 166 458

## Beschreibung

Die Erfindung bezieht sich auf eine Schliesseinrichtung für an einem Behälter A angeordnete Einfüllstutzen, gemäß dem Oberbegriff von Anspruch 1, insbesondere für einen auf einem Schienen- oder Strassenfahrzeug angeordneten und zum Beladen mit pulverförmigen oder körnigen Schüttgütern ausgebildeten Behälter.

Aus der Druckschrift WO 02/074581 A1 ist ein auf einem Schienen- oder Strassenfahrzeug angeordneter und zum Beladen pulverförmiger oder körniger Schüttgüter einem Vorratsbehälter (Silo) zuführbarer Behälter bekannt, welcher beispielsweise zwei an der Oberseite im Abstand zueinander angeordnete und jeweils über eine Durchgangsöffnung mit dem Innenraum des Behälters in Verbindung stehende Einfüllstutzen aufweist, welche jeweils mit einer daran angeordneten Schliesseinrichtung versehen sind. Die einzelne Schliesseinrichtung umfasst eine aussenseitig am Einfüllstutzen gelagerte und relativ dazu schwenkbare Abdeckhaube und im Innenraum ein um die vertikale Achse einer Schwenkvorrichtung relativ zu der Durchgangsöffnung schwenkbares Verschlusselement. Zum Beladen des einzelnen Behälters wird zunächst die an dem Einfüllstutzen angeordnete Abdeckhaube (Wetterschutz) entfernt oder relativ zu dem Einfüllstutzen aufgeschwenkt und anschliessend das innere Verschlusselement manuell mittels zusätzlicher Hilfsmittel um die vertikale Achse der Schwenkvorrichtung verschwenkt. Anschliessend wird ein mit einem Silobehälter in Verbindung stehender Verladekopf in die Durchgangsöffnung des Einfüllstutzens beziehungsweise in den Innenraum des Behälters eingeführt und nach dem Beladen wieder entfernt. Bei dem bekannten Behälter besteht das Problem, dass die Abdeckhaube sowie das Verschlusselement auch bei extremen äusseren Bedingungen (Winterbetrieb) vor dem Beladen sowie nach dem Beladen des Behälters jeweils manuell zu betätigen sind, so dass an dem Behälter zum Begehen desselben relativ kostenaufwendige Sicherheitsvorrichtungen vorzusehen sind.

Der Erfindung liegt die Aufgabe zugrunde, für den an einem Behälter der eingangs genannten Gattung angeordneten Einfüllstutzen eine zur Betätigung der aussenseitig sowie innenseitig angeordneten Verschlusselemente ausgebildete Schliesseinrichtung zu schaffen, welche die Nachteile des erwähnten Standes der Technik überwindet und mit geeigneten Mitteln eine in Bezug auf den Einfüllstutzen orientierte und gesteuerte Relativbewegung der beiden Verschlusselemente sowie ein exaktes Abdichten derselben in Bezug auf den Einfüllstutzen gewährleistet.

Die erfindungsgemässe Schliesseinrichtung, ist dadurch gekennzeichnet, dass mindestens eine Dichtung eine in Umfangrichtung orientierte und mit mindestens einem Anschlussglied sowie einer Versorgungsleitung in Verbindung stehende Druckkammer aufweist, welche in der Schliess-Stellung druckbeaufschlagbar und für die Offen-Stellung der Verschlusselemente druckentlastbar ist.

Mit der erfindungsgemässen Schliesseinrichtung wird in vorteilhafter Weise eine ansteuerbare und weitgehend automatische Schwenkbewegung der beiden Verschlusselemente sowie mittels der druckbeaufschlagbaren Dichtungen bzw. Absenken und Andrücken des äusseren Verschlusselementes mittels einer Druckfeder an eine Mannlochdichtung ein exaktes Abdichten und somit eine weitgehende Automatisierung des Beladevorgangs erreicht. Die Schwenkbewegung der beiden Verschlusselemente kann auch durch Aussenden eines die Schliesseinrichtung aktivierenden Signals, beispielsweise von einem ortsungebundenen Sender erfolgen.

Bei einer weiteren Ausgestaltung sind die Verschlusselemente derart an der vertikalen Achse angeordnet und damit wirkverbunden, dass diese simultan und relativ zu der Durchgangsöffnung des Einfüllstutzens schwenkbar sind.

Es ist weiterhin vorteilhaft, dass die in dem Verschlusselement beziehungsweise in dem Einsatzkörper des Einfüllstutzens angeordneten Dichtungen in den entsprechend ausgebildeten Ausnehmungen auswechselbar eingesetzt und durch mindestens eine am Umfang der Dichtung angeordneten Schraubverbindung befestigt sind.

Weitere Merkmale, Vorteile sowie zweckmässige weitere Ausgestaltungen der Erfindung ergeben sich aus der nachstehenden Beschreibung und den Patentansprüchen.

Ausführungsbeispiele der Erfindung werden nachstehend anhand der Zeichnung beschrieben. Es zeigt:
- **Fig.1**: ein in schematischer Ansicht dargestelltes und dem Silobehälter einer Schüttgut-Verladestation zugeführtes Schienenfahrzeug mit einem darauf angeordneten Behälter;
- **Fig.2**: das in Draufsicht dargestellte Fahrzeug gemäss Fig.1 mit dem Behälter und zwei daran im Abstand zueinander angeordneten Einfüllstutzen;
- **Fig.3**: den gemäss der Linie III-III in Fig.1 teilweise im Schnitt dargestellten Behälter mit dem Einfüllstutzen und einer daran angeordneten Schwenkvorrichtung für zwei relativ zu dem Einfüllstutzen bewegbare Verschlusselemente;
- **Fig.4**: den im Schnitt dargestellten Einfüllstutzen gemäss Fig.3 mit dem jeweils aussenseitig und innenseitig daran angeordneten Verschlusselement;
- **Fig.5**: ein in Fig.4 durch einen Kreis A bezeichnetes und in grösserem Massstab dargestelltes Teilstück des Einfüllstutzens mit daran angeordneter Dichtung;
- **Fig.6**: ein in grösserem Massstab dargestelltes erstes Ausführungsbeispiel der teilweise im Schnitt dargestellten Schwenkvorrichtung für die Verschlusselemente;
- **Fig.7**: den in schematischer Draufsicht dargestellten Einfüllstutzen mit der Schwenkvorrichtung und den beiden in geschlossener Stellung dargestellten Verschlusselementen;
- **Fig.8**: den Einfüllstutzen gemäss Fig.7 mit dem relativ dazu verschwenkten äusseren Verschlusselement;
- **Fig.9**: den Einfüllstutzen gemäss Fig.7 mit dem relativ dazu verschwenkten inneren Verschlusselement;
- **Fig.10**: ein zweites Ausführungsbeispiel der aussenseitig an dem Behälter angeordneten Schwenkvorrichtung für die beiden Verschlusselemente;
- **Fig.11**: den in schematischer Draufsicht dargestellten Einfüllstutzen gemäss Fig.10 mit den in geschlossener Stellung dargestellten Verschlusselementen;
- **Fig.12**: den Einfüllstutzen gemäss Fig.10 mit den beiden relativ dazu in die Offenstellung verschwenkten Verschlusselementen;
- **Fig.13**: eine Ausführungsvariante mit einem äusseren, anhebbaren Verschlusselement in einer schematischen Schnittzeichnung; und
- **Fig.14**: einen Ausschnitt des äusseren im Schnitt dargestellten Verschlusselementes 35 in der in Figur 13 gezeigten X Richtung.

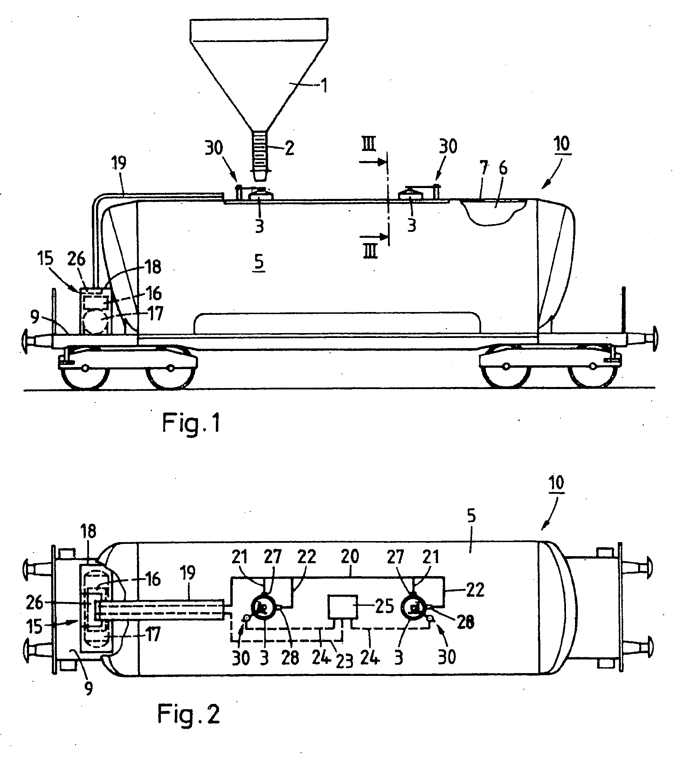

Fig.1 zeigt den schematisch dargestellten Silobehälter einer nicht näher dargestellten Schüttgüter-Verladestation, insbesondere für pulverförmige oder körnige Schüttgüter. Im dargestellten Ausführungsbeispiel ist dem Silobehälter 1 ein auf einem Schienenfahrzeug 10 angeordneter Behälter 5 zum Beladen mit dem Schüttgut zugeführt. Bei einer nicht dargestellten Variante kann der Behälter 5 auch auf einem der Verladestation zuführbaren Strassenfahrzeug angeordnet werden.

Der in Fig.1 in Ansicht dargestellte Behälter 5 hat beispielsweise zwei in axialer Richtung im Abstand zueinander angeordnete Einfüllstutzen 3, welche jeweils
zum Einführen eines an dem Silobehälter 1 angeordneten Verladekopfes 2 ausgebildet sind. Der einzelne Einfüllstutzen 3 steht über eine in Fig.1 nicht dargestellte Durchgangsöffnung mit dem Behälterinnenraum 6 in Verbindung. Zum Verschliessen und Öffnen der Durchgangsöffnung ist an jedem Einfüllstutzen 3 ein
in Bezug auf den Behälterinnenraum 6 beziehungsweise auf die Behälterwand 7 aussenseitig sowie ein innenseitig angeordnetes und in Fig.1 nicht näher dargestelltes Verschlusselement vorgesehen. Die Verschlusselemente sind jeweils an einer in Fig.1 schematisch dargestellten Schwenkvorrichtung 30 angeordnet und um eine vertikale Achse in horizontaler Ebene relativ zu der Durchgangsöffnung des Einfüllstutzens 3 schwenkbar. Die Schwenkbewegung der Verschlusselemente zum aussenseitigen sowie innenseitigen Öffnen oder Schliessen der Durchgangsöffnung erfolgt vorzugsweise simultan. Das aussenseitig an dem Behälter 5 angeordnete und an der Schwenkvorrichtung 30 befestigte Verschlusselement ist vorzugsweise als Wetterschutz ausgebildet.

An dem einen Ende des Schienenfahrzeuges 10 ist auf der Plattform 9 eine schematisch dargestellte und mit einem Druckluftbehälter 17, einer Energiequelle 16 sowie einer betätigbaren elektrischen Schalteinrichtung 26 versehene Bedienungseinheit 15 angeordnet. Der Druckluftbehälter 17 und die Energiequelle 16 sowie die Schalteinrichtung 26 sind in einem Gehäuse 18 angeordnet und werden jeweils über einen nicht dargestellten Netzanschluss mit Druckluft beziehungsweise elektrischer Energie versorgt. Als Energiequelle dient beispielsweise eine Druckluftflasche mit einem Volumen von 50 l und 200 bar. An dem abschliessbar ausgebildeten Gehäuse 18 ist weiterhin ein bis oben auf den Behälter 5 reichender Leitungskanal 19 angeordnet. In dem Leitungskanal 19 sind einerseits mit dem Druckluftbehälter 17, der Energiequelle 16 und der Schalteinrichtung 26 und andererseits mit dem Einfüllstutzen 3 sowie mit der Schwenkvorrichtung 30 in Verbindung stehende pneumatische und elektrische Versorgungsleitungen angeordnet.

Fig.2 zeigt das in schematischer Draufsicht dargestellte Schienenfahrzeug 10 mit dem Behälter 5 und den beiden im Abstand zueinander angeordneten Einfüllstutzen 3. Weiterhin erkennt man die auf der Plattform 9 angeordnete Bedienungseinheit 15 mit dem. Gehäuse 18. In dem Gehäuse 18 ist der Druckluftbehälter 17, die Energiequelle 16 sowie die Schalteinrichtung 26 angeordnet, welche jeweils für die Energieversorgung an ein nicht näher dargestelltes Versorgungssystem der Verladestation anschliessbar sind. Der Druckluftbehälter 17 steht über eine in dem Leitungskanal 19 angeordnete Versorgungsleitung 20 sowie über daran angeordnete Anschlussleitungen 21 ,22 und Anschlussglieder 27,28 mit den beiden Verschlusselementen in Verbindung. Die Energiequelle 16 steht beispielsweise über eine elektrische Versorgungsleitung 23 mit einer vorzugsweise oben auf dem Behälter 5 angeordneten Steuereinheit 25 in Verbindung. Die beispielsweise mittels einer nicht dargestellten Fernbedienung aktivierbare Steuereinheit 25 steht über eine elektrische Leitung 24 mit der Schwenkvorrichtung 30 in Verbindung. Die Verschlusselemente der beiden Einfüllstutzen 3 werden zum Öffnen und/oder Verschliessen der Durchgangsöffnungen vorzugsweise simultan betätigt. Eine getrennte, druckgesteuerte Betätigung der Verschlusselemente ist jedoch ebenfalls möglich.

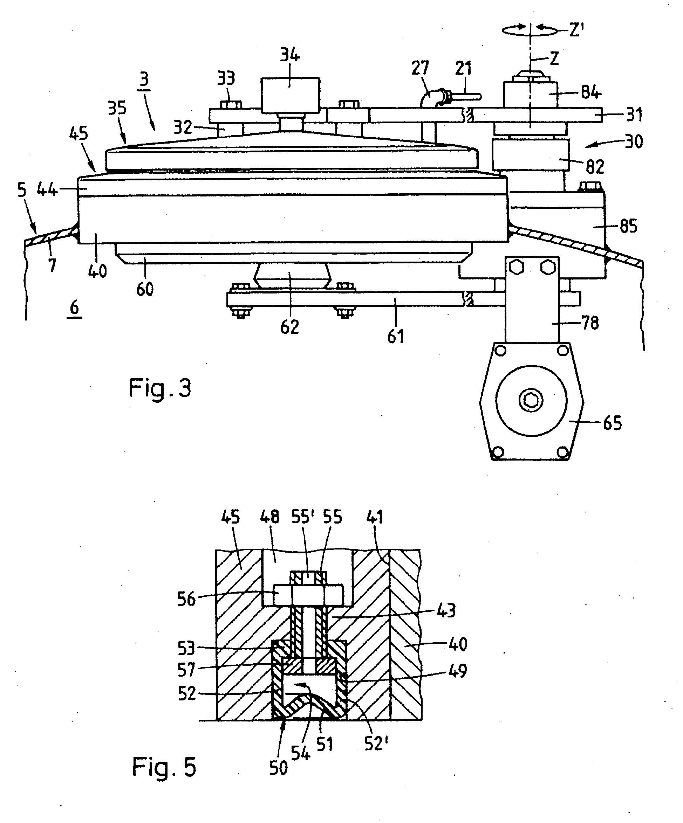

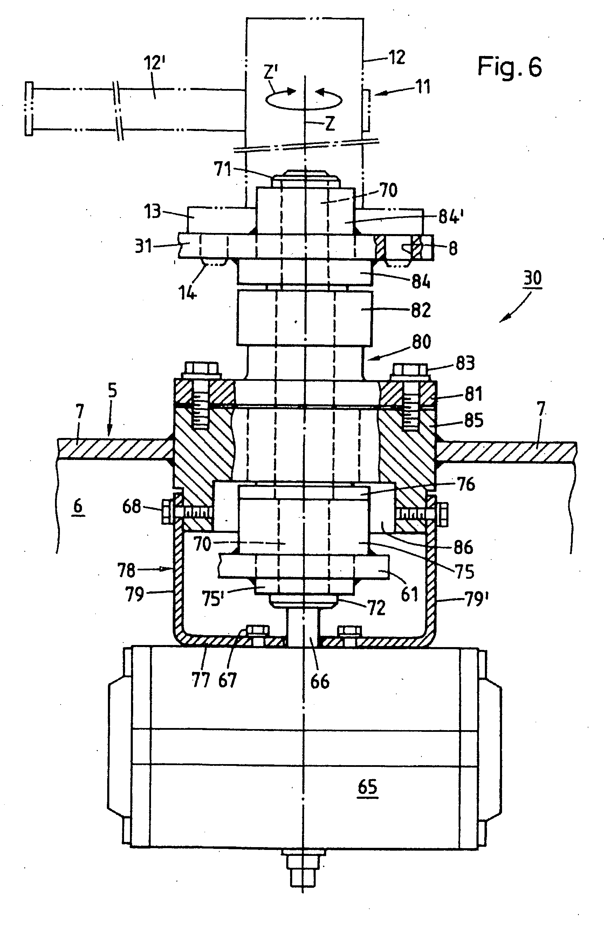

Fig.3 zeigt ein Teilstück des teilweise im Schnitt dargestellten Behälters 5 mit dem an der Behälterwand 7 befestigten und in Ansicht dargestellten Einfüllstutzen 3. Der Einfüllstutzen 3 umfasst einen in die Behälterwand 7 eingeschweissten Rohrstutzen 40 sowie einen in den Rohrstutzen 40 einführbaren und mit einem Auflagering 44 versehenen Einsatzkörper 45. Weiterhin erkennt man die dem Einfüllstutzen 3 zugeordnete Schwenkvorrichtung 30 für die beiden in horizontaler Ebene schwenkbaren Verschlusselemente 35 und 60. Das aussenseitig an dem Einfüllstutzen 3 angeordnete und mittels Schrauben 33 und Distanzhülsen 32 an einem ersten Schwenkarm 31 der Schwenkvorrichtung 30 angeordnete erste Verschlusselement 35 ist vorzugsweise als wetterfeste Abdeckhaube ausgebildet. An dem ersten Verschlusselement 35 ist weiterhin ein Belüftungsfilter 34 angeordnet. Das innenseitig an dem Einfüllstutzen 3 angeordnete zweite Verschlusselement 60 ist mit einem Zwischenglied 62 an einem zweiten Schwenkarm 61 der Schwenkvorrichtung 30 gelagert. Die in Fig.3 in Ansicht dargestellte und in einem an der Behälterwand 7 befestigten Kopfstück 85 gelagerte Schwenkvorrichtung 30 mit den einzelnen Elementen wird später in Verbindung mit Fig.6 im einzelnen beschrieben.

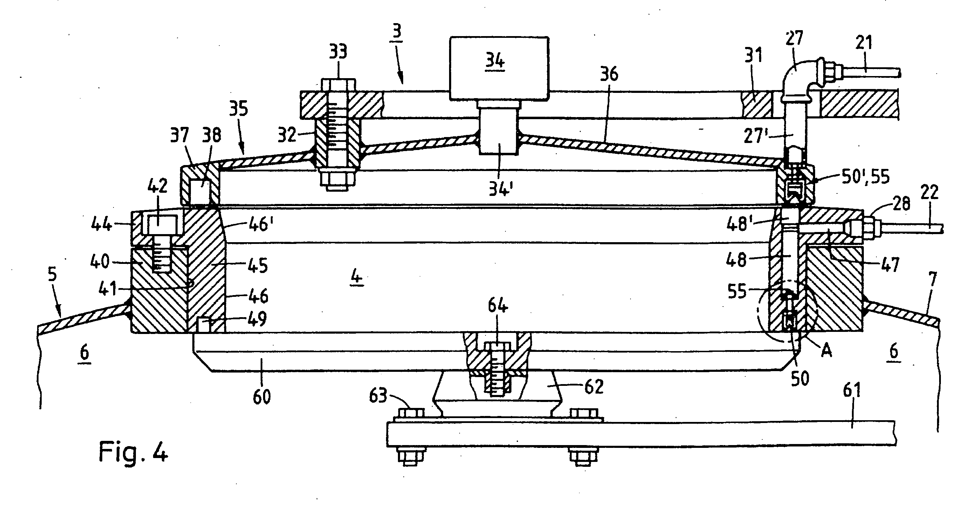

In Fig.4 ist der Einfüllstutzen 3 im Schnitt dargestellt und man erkennt ein Teilstück des Behälters 5 mit dem daran angeordneten Rohrstutzen 40 sowie das damit in Eingriff stehende und an dem ersten Schwenkarm 31 gelagerte erste Verschlusselement 35 sowie das mit dem zweiten Schwenkarm 61 wirkverbundene zweite Verschlusselement 60. An dem zweiten Schwenkarm 61 ist zur Lagerung des Verschlusselements 60 das Zwischenglied 62 angeordnet und mittels Schrauben 63,64 befestigt.

Das erste Verschlusselement 35 ist mit den Distanzbuchsen 32 und Schrauben 33 an dem ersten Schwenkarm 31 befestigt und damit wirkverbunden. Das erste Verschlusselement 35 hat einen Ringkörper 37 sowie eine daran angeordnete und befestigte Abdeckhaube 36. Die Abdeckhaube 36 ist vorzugsweise als relativ flacher kegeldachförmiger Wetterschutz ausgebildet. An der Abdeckhaube 36 ist der mit einem Stutzen 34' in die Durchgangsöffnung 4 ragende Belüftungsfilter 34 angeordnet und mit nicht dargestellten Mitteln befestigt. Der Ringkörper 37 ist weiterhin zur Aufnahme einer als zirkulärer Ring ausgebildeten Dichtung 50' mit einer in Umfangsrichtung orientierten Ausnehmung 38 versehen. Die in Fig.4 teilweise und schematisch dargestellte Dichtung 50' ist mit Druckluft beaufschlagbar und steht über mindestens einen daran angeordneten Anschluss-Stutzen 55 sowie über ein Rohrstück 27' und dem als Rohrbogen ausgebildeten Anschlussglied 27 mit der an die Druckluft-Versorgungsleitung 20 (Fig.2) angeschlossenen Leitung 21 in Verbindung.

Der in Fig.4 dargestellte und an der Behälterwand 7 des Behälters 5 befestigte Rohrstutzen 40 hat einen zylindrischen Hohlraum 41, welcher zur Aufnahme des mit der Durchgangsöffnung 4 und einem Auflagering 44 versehenen Einsatzkörper 45 ausgebildet ist. Der Einsatzkörper 45 ist mittels am Umfang des Auflagerings 44 verteilter Schrauben 42 an dem Rohrstutzen 40 befestigt. Der Einsatzkörper 45 hat eine die Durchgangsöffnung 4 bildende zylindrische Innenwand 46 sowie eine in Richtung des ersten Verschlusselements 35 konisch erweiternd ausgebildete Innenwand 46'. Auf der dem zweiten Verschlusselement 60 zugewandten Seite ist der Einsatzkörper 45 mit einer in Umfangsrichtung orientierten und zur Aufnahme einer Dichtung 50 ausgebildeten Ausnehmung 49 versehen.

Die in Fig.4 teilweise und schematisch dargestellte Dichtung 50 ist ebenfalls mit Druckluft beaufschlagbar und steht über mindestens einen daran angeordneten Anschluss-Stutzen 55 sowie über eine in dem Einsatzkörper 45 angeordnete erste Bohrung 48 und über eine quer dazu orientierte zweite Bohrung 47 mit dem am Auflagering 44 angeordneten und als Schraubstutzen ausgebildeten Anschlussglied 28 mit der an die Druckluft-Versorgungsleitung 20 (Fig.2) angeschlossenen Leitung 22 in Verbindung. Die erste Bohrung 48 ist am oberen Ende durch einen in den Auflagering 44 eingeschraubten Dichtstopfen 48' verschlossen.

Fig.5 zeigt ein in Fig.4 durch einen Kreis A bezeichnetes und in grösserem Massstab sowie im Schnitt dargestelltes Teilstück des Rohrstutzens 40 mit dem in dem zylindrischen Hohlraum 41 angeordneten und mit der Ausnehmung 49 für die Dichtung 50 versehenen Einsatzkörper 45. Die in Fig.5 im Profilquerschnitt dargestellte und mit einer Druckkammer 54 versehene Dichtung 50 umfasst zwei im Abstand zueinander angeordnete Seitenwände 52 und 52', einen dieselben miteinander verbindenden oberen Boden 53 sowie einen im Abstand dazu angeordneten unteren Boden 51. Der untere Boden 51 ist in Richtung der Druckkammer 54 nach innen etwa gewölbt ausgebildet und bei Druckbeaufschlagung der Druckkammer 54 zur abdichtenden Anlage an dem zugewandten Element (Auflagering 44 bzw. Verschlusselement 60) elastisch verformbar. Die Druckkammer 54 steht über eine den Anschluss-Stutzen 55 durchdringende Bohrung 55' mit der in dem Einsatzkörper 45 vorgesehenen und mit Druckluft beaufschlagbaren Bohrung 48 in Verbindung. Der an der Dichtung 50 angeordnete Anschluss-Stutzen 55 ist an dem einen Ende mit einer in der Druckkammer 54 angeordneten Anlagescheibe 57 versehen und an dem anderen Ende mittels einer aufgeschraubten Mutter 56 an der zwischen der Bohrung 48 und der Ausnehmung 49 des Einsatzkörpers 45 vorgesehenen Zwischenwand 43 des Einsatzkörpers 45 befestigt.

An dieser Stelle wird darauf hingewiesen, dass die an dem ersten Verschlusselement 35 in der zirkulären Ausnehmung 38 angeordnete Dichtung 50' sowie die an dem zweiten Verschlusselement 60 in der zirkulären Ausnehmung 49 angeordnete Dichtung 50 im wesentlichen analog ausgebildet sind.

Fig.6 zeigt als erstes Ausführungsbeispiel die in Ansicht und teilweise im Schnitt dargestellte Schwenkvorrichtung 30, welche in dem an der Behälterwand 7 des Behälters 5 befestigten Kopfstück 85 gelagert und mit einem in dem Behälterinnenraum 6 angeordneten Drehantrieb 65 in Wirkverbindung steht. Die Schwenkvorrichtung 30 umfasst ein in dem Kopfstück 85 angeordnetes und zur koaxialen Lagerung eines Achskörpers 70 ausgebildetes Führungsgehäuse 80. Das Führungsgehäuse 80 ist mit einem Flansch 81 an dem Kopfstück 85 gelagert und mittels Schrauben 83 befestigt.

An dem einen Ende des Achskörpers 70 ist ein erster Lagerkörper 84 angeordnet, welcher zur Lagerung und Befestigung des ersten Schwenkarms 31 ein abgesetztes Teilstück 84' aufweist und mit einem Sicherungsring 71 an dem Achskörper 70 gehalten ist. Der erste Lagerkörper 84 mit dem daran angeordneten ersten Schwenkarm 31 sind mit nicht dargestellten Mitteln mit dem Achskörper 70 wirkverbunden und miteinander um die vertikale Achse Z desselben in Pfeilrichtung Z' schwenkbar. In dem Führungsgehäuse 80 sind nicht näher dargestellte und mit einer Druckfeder in Wirkverbindung stehende Dichtelemente angeordnet, welche am oberen Ende durch eine Überwurfmutter 82 und am unteren Ende durch eine am Achskörper 70 angeordnete Scheibe 76 gehalten sind. An dem unteren Ende des Achskörpers 70 ist in einer Ausnehmung 86 des Kopfstücks 85 ein zweiter Lagerkörper 75 angeordnet, welcher mit einem Sicherungsring 72 an dem Achskörper 70 gehalten und zur Befestigung des zweiten Schwenkarms 61 mit einem abgesetzt ausgebildeten Teilstück 75' versehen ist.

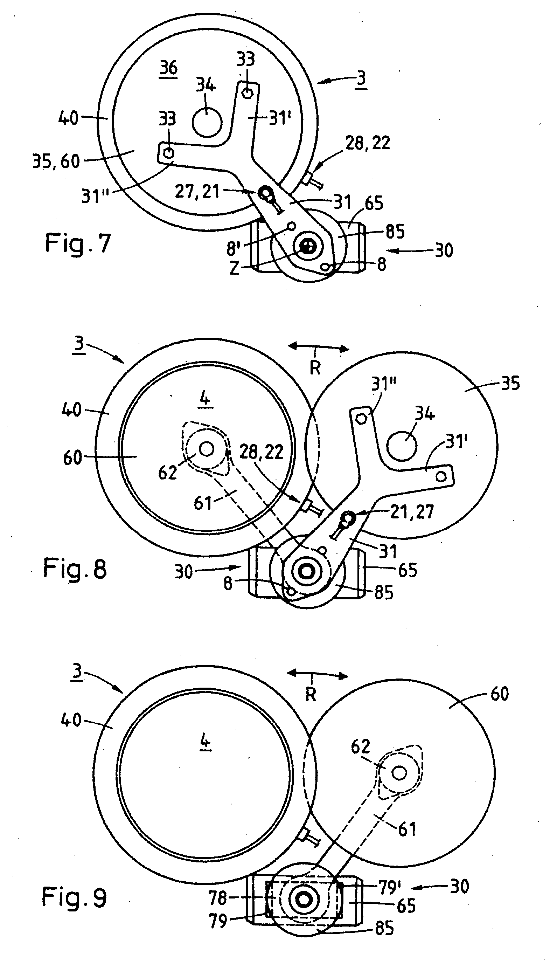

Der in nicht näher dargestellter Weise über einen Achszapfen 66 mit dem Achskörper 70 der Schwenkvorrichtung 30 wirkverbundene Drehantrieb 65 ist mittels Schrauben 67 an einem Halteelement 78 befestigt. Das im Profilquerschnitt im wesentlichen U-förmig ausgebildete Halteelement 78 umfasst einen Boden 77 sowie zwei seitlich daran angeformte und im Abstand zueinander angeordnete Seitenwände 79,79' und ist mittels Schrauben 68 an dem mit einer nicht näher dargestellten seitlichen Anlagefläche versehenen Kopfstück 85 befestigt. Der an dem zweiten Lagerkörper 75 angeordnete und befestigte zweite Schwenkarm 61 ist um die vertikale Achse Z des Achskörpers 70 gemäss Pfeilrichtung Z', wie in Fig.9 schematisch dargestellt, zwischen den beiden Seitenwänden 79,79' schwenkbar.

An dieser Stelle wird darauf hingewiesen, dass die um die vertikale Achse Z in Pfeilrichtung Z' orientierte Bewegung des Achskörpers 70 sowie die damit wirkverbundenen Elemente mittels des ansteuerbaren Drehantriebs 65 erfolgt. Bei etwaigen Störungen kann die Drehbewegung der Elemente auch mittels einer in Fig.6 schematisch dargestellten Hilfsvorrichtung 11 erfolgen, welche ein Aufsatzelement 12 mit daran angeordnetem Hebel 12' sowie eine Auflageplatte 13 mit mindestens zwei daran befestigten Zapfen 14 umfasst, die zur Erreichung einer manuellen Betätigung der Schwenkvorrichtung 30 in entsprechend am ersten Schwenkarm 31 vorgesehene und, wie in Fig.7 dargestellt, im Abstand zueinander angeordnete Bohrungen 8,8' eingreifen.

In Fig.7 ist der Einfüllstutzen 3 sowie der Rohrstutzen 40 mit den beiden mit der Schwenkvorrichtung 30 wirkverbundenen und in geschlossener Stellung dargestellten Verschlusselementen 35 und 60 in Draufsicht dargestellt. An der Schwenkvorrichtung 30 ist der mit dem Drehantrieb 65 wirkverbundene erste Schwenkarm 31 angeordnet. Am vorderen Ende ist der erste Schwenkarm 31 mittels zwei gespreizt zueinander angeordneten Teilstücke 31' und 31" und Schrauben 33 aussenseitig an der Abdeckhaube 36 des Verschlusselements 35 befestigt. Zwischen den beiden Teilstücken 31' und 31" ist der Belüftungsfilter 34 angeordnet und an dem Verschlusselement 35 befestigt. Weiterhin erkennt man den an dem ersten Verschlusselement 35 (Fig.4) angeordneten und schematisch dargestellten Rohrbogen 27 mit der Leitung 21 sowie das an dem Einsatzkörper 45 (Fig.4) des Rohrstutzens 40 angeordnete Anschlussglied 28 mit der Leitung 22.

In Fig.8 und Fig.9 ist der Einfüllstutzen 3 gemäss Fig.7 in Draufsicht dargestellt, wobei gemäss Fig.8 das an dem ersten Schwenkarm 31 der Schwenkvorrichtung 30 angeordnete erste Verschlusselement 35 und gemäss Fig.9 das an dem zweiten Schwenkarm 61 der Schwenkvorrichtung 30 angeordnete zweite Verschlusselement 60 jeweils in der Offenstellung relativ zu der Durchgangsöffnung 4 des Rohrstutzens 40 verschwenkt dargestellt sind. Wie vorstehend erwähnt, ist die mit dem Drehantrieb 65 wirkverbundene Schwenkvorrichtung 30 derart ausgebildet, dass die beiden Verschlusselemente 35 und 60 mittels der beiden daran angeordneten Schwenkarme 31 und 61 vorzugsweise simultan und relativ zu der Durchgangsöffnung 4 des Rohrstutzens 40 in Doppelpfeilrichtung R schwenkbar sind. In Fig.9 ist weiterhin das am Kopfstück 85 angeordnete Halteelement 78 für den Drehantrieb 65 dargestellt und man erkennt den zwischen den beiden Seitenwänden 79,79' schwenkbaren Tragarm 61.

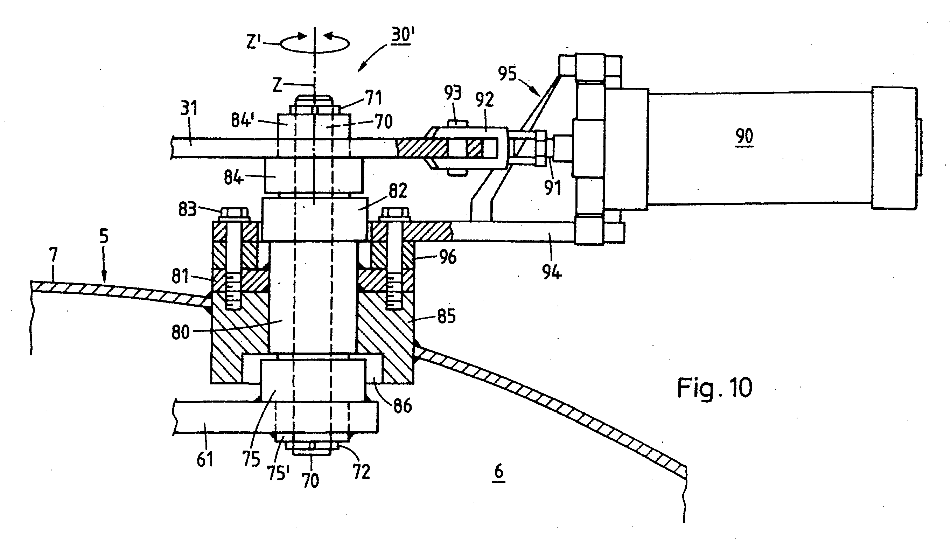

Fig.10 zeigt ein zweites Ausführungsbeispiel der teilweise im Schnitt dargestellten Schwenkvorrichtung 30' für einen Antrieb 90 und man erkennt das an der Behälterwand 7 des Behälters 5 befestigte Kopfstück 85 sowie das darin gelagerte Führungsgehäuse 80 für den Achskörper 70. An dem Kopfstück 85 ist das mit dem Flansch 81 und der Überwurfmutter 82 versehene Führungsgehäuse 80, ein Zwischenstück 96 sowie eine Tragplatte 94 angeordnet. Die einzelnen Elemente 80,81 und 96,94 sind mittels der Schrauben 83 an dem Kopfstück 85 befestigt.

An dem einen Ende des Achskörpers 70 ist der erste Lagerkörper 84 angeordnet, welcher zur Lagerung und Befestigung des ersten Schwenkarms 31 mit dem abgesetzten Teilstück 84' versehen und mit dem Sicherungsring 71 an dem Achskörper 70 gehalten ist. An dem anderen Ende des Achskörpers 70 ist in der Ausnehmung 86 des Kopfstücks 85 der zweite Lagerkörper 75 angeordnet und mit dem Sicherungsring 72 an dem Achskörper 70 gehalten. An dem abgesetzten Teilstück 75' des Lagerkörpers 70 ist der zweite Schwenkarm 61 angeordnet und befestigt. Die beiden Lagerkörper 84 und 75 sind mit nicht näher dargestellten Mitteln mit dem Achskörper 70 wirkverbunden und zusammen mit den jeweils daran befestigten Schwenkarmen 31 und 61 um die vertikale Achse Z des Achskörpers 70 in Pfeilrichtung Z' schwenkbar.

Abweichend von dem ersten Ausführungsbeispiel gemäss Fig.6 sind bei dem zweiten Ausführungsbeispiel gemäss Fig.10 die mit dem ersten Schwenkarm 31 wirkverbundenen Antriebsmittel aussenseitig an dem Behälter 5 angeordnet und auf der Tragplatte 94 gelagert. Die Antriebsmittel umfassen einen pneumatisch oder hydraulisch oder elektrisch ansteuerbaren Antrieb 90, welcher mit einem Lagerbock 95 auf der an der Schwenkvorrichtung 30' angeordneten und befestigten Tragplatte 94 angeordnet und mit nicht dargestellten Mitteln befestigt ist. Der mit einer aktivierbaren Kolbenstange 91 versehene Antrieb 90 ist über ein Gabelstück 92 sowie einem Bolzen 93 mit dem ersten Schwenkarm 31 wirkverbunden.

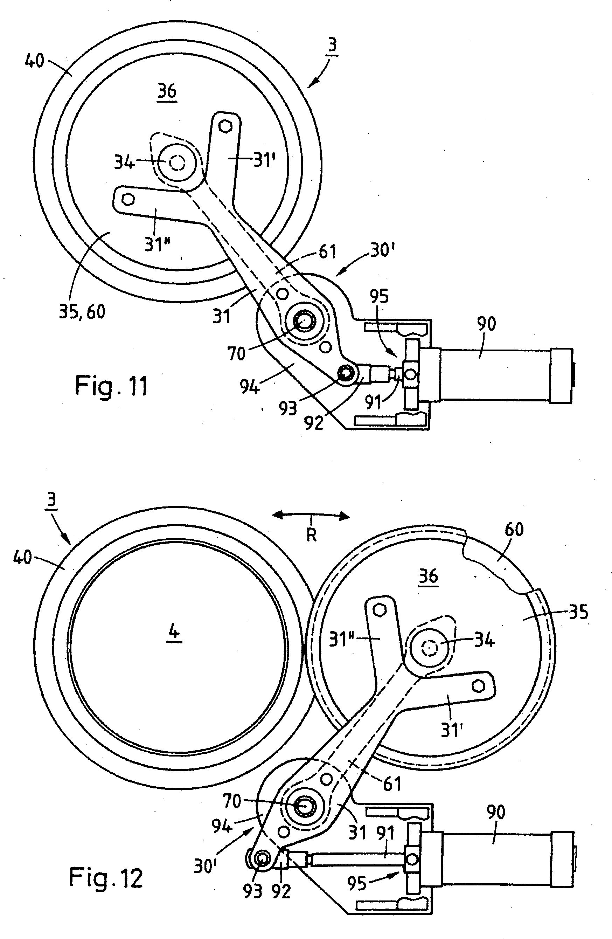

In Fig.11 ist der Einfüllstutzen 3 sowie der Rohrstutzen 40 mit den beiden mit der Schwenkvorrichtung 30' wirkverbundenen und in geschlossener Stellung dargestellten Verschlusselementen 35 und 60 in Draufsicht dargestellt. An der Schwenkvorrichtung 30' ist der mit dem Antrieb 90 wirkverbundene und mit den beiden gespreizt zueinander angeordneten Teilstücken 31' und 31" versehene erste Schwenkarm 31 angeordnet und an der Abdeckhaube 36 des Verschlusselements 35 befestigt. Zwischen den beiden Teilstücken 31' und 31" ist der Belüftungsfilter 34 angeordnet und an dem äusseren Verschlusselement 35 befestigt.

Fig.12 zeigt den in Draufsicht dargestellten Einfüllstutzen 3 mit den beiden an den Schwenkarmen 31 und 61 angeordneten Verschlusselementen 35 und 60, welche infolge des aktivierten Antriebs 90 relativ zu dem Rohrstutzen 40 beziehungsweise zu der Durchgangsöffnung 4 verschwenkt dargestellt sind. Wie vorstehend erwähnt, ist die mit dem Antrieb 90 wirkverbundene Schwenkvorrichtung 30' derart ausgebildet, dass die beiden Verschlusselemente 35 und 60 mittels der beiden daran angeordneten Schwenkarme 31 und 61 vorzugsweise simultan und relativ zu der Durchgangsöffnung 4 des Rohrstutzens 40 in Doppelpfeilrichtung R schwenkbar sind.

Weiterhin erkennt man in Figur 11 und 12 die in Draufsicht dargestellte Schwenkvorrichtung 30' und die Tragplatte 94 mit dem Lagerbock 95 für den Antrieb 90. In Fig.12 ist die axial verschiebbare Kolbenstange 91 für die Bewegung der beiden Schwenkarme 31,61 und Verschlusselemente 35,60 in der Endstellung dargestellt.

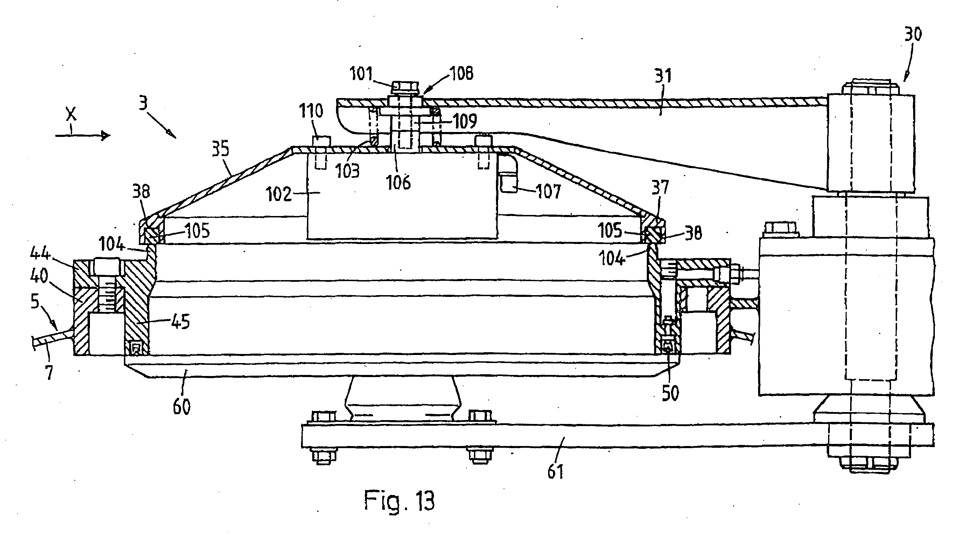

Fig. 13 zeigt ein weiteres Ausführungsbeispiel der erfindungsgemässen Schliesseinrichtung, bei welcher das äussere Verschlusselemente 35 relativ zu dem Auflagering 44 des Einfüllstutzens 3 in vertikaler Richtung anhebbar und absenkbar ist. Das innere Verschlusselement 60 und die Schwenkvorrichtung 30 sind mit den vorstehend beschriebenen Ausführungen identisch.

In der Figur 13 ist der Einfüllstutzen 3 mit dem äusseren, anheb- und anhebbaren Verschlusselement 35 in einer schematischen Schnittzeichnung gezeigt. Der Einfüllstutzen 3 umfasst den in die Behälterwand 7 eingeschweissten Rohrstutzen 40 sowie den in den Rohrstutzen 40 einführbaren und mit dem Auflagering 44 versehenen Einsatzkörper 45, der auf der dem ersten Verschlusselement 35 zugewandten Seite einen an dem Auflagering 44 angeordneten und nach oben ragenden zirkulären Kragen 104 aufweist. Im unteren Randbereich des äusseren Verschlusselementes 35 ist auf der dem Kragen 104 des Auflagerings 44 zugewandten Seite der Ringkörper 37 mit der in Umfangsrichtung orientierten Ausnehmung 38 zu erkennen, welch zur Aufnahme einer Dichtung 105 ausgebildet ist. Im Inneren des Verschlusselementes 35 ist ein Pneumatikzylinder 102 angeordnet, dessen Kolbenstange 106 vertikal nach oben ragt. Das obere Ende der Kolbenstange 106 ist mit einer Schraube 101 am ersten Schwenkarm 31 befestigt. Somit ist das Verschlusselement 35 über den Pneumatikzylinder 102 und dessen Kolbenstange 106 mit dem ersten Arm 31 wirkverbunden. Eine Steckverschraubung 107 dient der in der Figur 13 nicht dargestellten Druckluftversorgung des vorzugsweise als Kurzhubzylinder ausgebildeten Pneumatikzylinders. Zwischen dem Arm 31 und dem Verschlusselement 35 ist eine Druckfeder 103 angeordnet, die das Verschlusselement 35 vom Schwenkarm 31 weg gegen den Kragen 104 des Auflagerings 44 drückt, so dass die Dichtung 105 des Verschlusselementes 35 am Kragen 104 dichtend angedrückt ist. Weiter erkennt man die dem Einfüllstutzen 3 zugeordnete Schwenkvorrichtung 30 für die beiden in horizontaler Ebene schwenkbaren Verschlusselemente 35 und 60, die mit der vorstehend in Verbindung mit Figur 6 bzw. Figur 10 bereits beschriebenen Schwenkvorrichtung identisch ist.

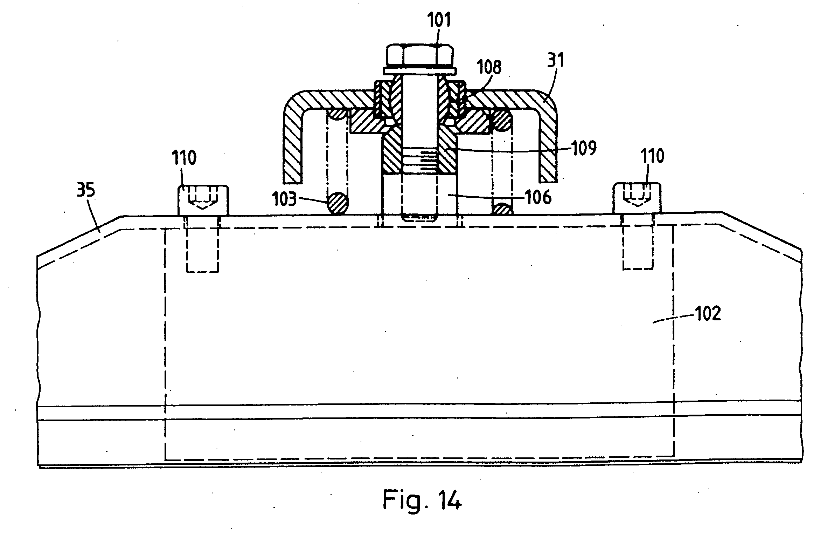

Die Fig. 14 zeigt einen Ausschnitt des äusseren Verschlusselementes 35 gemäss der in Figur 13 gezeigten X Richtung. Im oberen abgeflachten Bereich des Verschlusselementes 35 ist der mit Schrauben 110 daran befestigte Pneumatikzylinder 102 zu erkennen. Der im Schnitt dargestellte Schwenkarm 31 weist ein Gelenklager 108 auf, das der Aufnahme der Schraube 101 dient, mit welcher die senkrecht nach oben ragende Kolbenstange 106 des Pneumatikzylinders 102 befestigt ist. Zwischen der dem Verschlusselement 35 zugewandten Unterseite des Schwenkarms 31 und dem Verschlusselement 35 ist die Druckfeder 103 angeordnet. Über die Schraubverbindung der Schraube 101 und der Distanzhülse 109 ist der Schwenkarm 31 mit dem Verschlusselement 35 über die Kolbenstange 106 und den Pneumatikzylinder 102 wirkverbunden. Der im Beispiel gezeigte Pneumatikzylinder 102 ist ein doppeltwirkender Kurzhub-Pneumatikzylinder 102, der im Zusammenwirken mit der Druckfeder 103 eine Schaltfunktion ausübt. Sobald der Pneumatikzylinder mit Druck beaufschlagt wird, bewegt sich die Kolbenstange 106 in Richtung des Zylinders. Da die Kolbenstange 106 fest mit dem Schwenkarm 31 verbunden ist, bewirkt diese Bewegung ein Anheben des Verschlusselementes 35 gegen die Rückstellkraft der Druckfeder 103 in Richtung des Schwenkarms 31. Beim Entlüften des Pneumatikzylinders drückt die Druckfeder 103 das Verschlusselement 35 vom Schwenkarm 31 weg in Richtung des Auflagerings 4. Das heisst, dass über eine hier nicht dargestellte Druckluftsteuerung das Verschlusselement 35 zwischen einer oberen und unteren Position relativ zu dem zirkulären Kragen 104 des Auflagerings 44 anheb- und absenkbar ist.

Beim Öffnen und Schliessen der Schliesseinrichtung gemäss Figur 13 und 14 wird mittels der Druckluftsteuerung das äussere Verschlusselement 35 angehoben. Dadurch liegt die Dichtung 105 nicht mehr auf dem Kragen 104 auf. Weiter wird die zum Abdichten des unteren Verschlusselementes 60 vorgesehene Druckkammer 54 der Dichtung 50 druckentlastet wodurch nun die beiden Verschlusselemente 35, 60 horizontal mittels der Schwenkvorrichtung 30 relativ zu der Durchgangsöffnung 4 des Einfüllstutzens 3 schwenkbar sind. Zum Verschliessen der Durchgangsöffnung 4 werden die Verschlusselemente 35, 60 entsprechend über der Durchgangsöffnung 4 in der Schliess-Stellung positioniert. Durch die Entlüftung des Pneumatikzylinders 102 wird das äussere Verschlusselement 35 abgesenkt. Die Druckfeder 103 drückt dabei das Verschlusselement 35 nach unten und damit auch die Dichtung 105 gegen den Kragen 104 des Auflagerings 44. Damit ist die Durchgangsöffnung 4 von aussen her dicht abgeschlossen. Die Druckkammer 54 der Dichtung 50 wird mit Druck beaufschlagt, wodurch auch das untere Verschlusselement 60 die Durchgangöffnung von innen her dicht abschliesst.

Abweichend von dem in Fig. 4 dargestellten Ausführungsbeispiel ist die in dem Verschlusselement 35 angeordnete Dichtung 105 vorzugsweise als quadratische Vierkant-Dichtschnur ausgebildet und auswechselbar in der zirkulären Ausnehmung 38 angeordnet.

## Patentansprüche

1. Schliesseinrichtung für einen insbesondere auf einem Schienen- oder Strassenfahrzeug (10) angeordneten und zum Beladen mit pulverförmigen oder körnigen Schüttgütern ausgebildeten Behälter (5), die Schliesseinrichtung umfassend einen Einfüllstutzen (3), der mit einer Durchgangsöffnung (4) versehenen ist und, am Behälter (5) montiert, mit dem Behälterinnenraum (6) in Verbindung steht, wobei die Schliesseinrichtung weiter eine Schwenkvorrichtung (30) sowie ein erstes Verschlusselement (35) und ein zweites Verschlusselement (60) zum aussen- und innenseitigen Verschliessen oder Öffnen der Durchgangsöffnung (4) aufweist, und wobei die Verschlusselemente (35,60) horizontal um eine gemeinsame vertikale Achse (Z) der mit ansteuerbaren Antriebsmitteln (65,90) in Wirkverbindung stehenden Schwenkvorrichtung (30) relativ zu der Durchgangsöffnung (4) des Einfüllstutzens (3) schwenkbar sind, und wobei jeweils an einem Ende des Einfüllstutzens bzw. am entsprechenden Verschlusselement eine Dichtung (50,50') angeordnet ist, **dadurch gekennzeichnet, dass** mindestens eine Dichtung eine in Umfangrichtung orientierte und mit mindestens einem Anschlussglied (27,28) sowie einer Versorgungsleitung (20) in Verbindung stehende Druckkammer (54) aufweist, welche in der Schliess-Stellung druckbeaufschlagbar und für die Offen-Stellung der Verschlusselemente (35,60) druckentlastbar ist.

2. Schliesseinrichtung nach Anspruch 1, **gekennzeichnet durch** eine an dem Behälter (5) angeordnete und von einem ortsungebundenen Sender **durch** Aussenden eines Signals aktivierbare Steuereinheit (25), welche zum Verschwenken der beiden Verschlusselemente (35,60) um die Achse (Z) mit der Schwenkvorrichtung (30) wirkverbunden ist.

3. Schliesseinrichtung nach den Ansprüchen 1 oder 2, **gekennzeichnet durch** zwei im Abstand zueinander an einem Achskörper (70) der Schwenkvorrichtung (30) angeordnete und jeweils zur Lagerung der beiden Verschlusselemente (35,60) ausgebildete Schwenkarme (31,61), welche von einem in dem Behälterinnenraum (6) angeordneten Drehantrieb (65) simultan um die vertikale Achse (Z) des Achskörpers (70) schwenkbar sind.

4. Schliesseinrichtung nach den Ansprüchen 1 oder 2, **gekennzeichnet durch** zwei im Abstand zueinander an einem Achskörper (70) der Schwenkvorrichtung (30) angeordnete und jeweils zur Lagerung der beiden Verschlusselemente (35,60) ausgebildete Schwenkarme (31,61), welche von einem aussen an dem Behälter (5) angeordneten Antrieb (90) simultan um die vertikale Achse (Z) des Achskörpers (70) schwenkbar sind.

5. Schliesseinrichtung nach Anspruch 4, **dadurch gekennzeichnet, dass** der Antrieb (90) als beaufschlag- und entlastbarer Druckzylinder ausgebildet ist.

6. Schliesseinrichtung nach einem der Ansprüche 1 bis 5, **dadurch gekennzeichnet, dass** der Einfüllstutzen (3) einen Rohrstutzen (40) zur koaxialen Aufnahme eines Einsatzkörpers (45) aufweist, welcher auf der dem ersten Verschlusselement (35) zugewandten Seite mit einem Auflagering (44) für eine erste Dichtung (50',105) und auf der dem zweiten Verschlusselement (60) zugewandten Seite mit einer in Umfangsrichtung orientierten Ausnehmung (49) für die mit einer zirkulären Druckkammer (54) versehene zweite Dichtung (50) aufweist.

7. Schliesseinrichtung nach Anspruch 6, **dadurch gekennzeichnet, dass** das erste Verschlusselement (35) eine als kegeldachförmigen Wetterschutz ausgebildete Abdeckhaube (36) sowie einen Ringkörper (37) umfasst, welcher auf der dem Auflagering (44) zugewandten Seite eine in Umfangsrichtung orientierte Ausnehmung (38) für die erste Dichtung (50', 105) aufweist, welche entweder mit einer zirkulären Druckkammer (54) versehen oder als quadratische Vierkant-Dichtschnur ausgebildet ist.

8. Schliesseinrichtung nach Anspruch 6 oder 7, **dadurch gekennzeichnet, dass** die mit einer Drückkammer (54) versehenen Dichtungen (50,50') mehrere in Umfangsrichtung verteilt zueinander angeordnete Anschluss-Stutzen (55) aufweisen, mittels welcher die Dichtungen (50,50') an dem Ringkörper (37) des Verschlusselements (35) beziehungsweise an dem Einsatzkörper (45) des Rohrstutzens (40) befestigt sind.

9. Schliesseinrichtung nach Anspruch 6 oder 7, **dadurch gekennzeichnet, dass** die Dichtungen (50,50',105) auswechselbar in der Ausnehmung (38) des Ringkörpers (37) beziehungsweise in der Ausnehmung (49) des Einsatzkörpers (45) angeordnet sind.

10. Schliesseinrichtung nach Anspruch 6 oder 7, **dadurch gekennzeichnet, dass** die mit einer Druckkammer (54) versehenen Dichtungen (50,50') über mehrere in Umfangsrichtung verteilt zueinander angeordnete Anschlussglieder (27,28) an die Versorgungsleitung (20) angeschlossen sind.

11. Schliesseinrichtung nach den Ansprüchen 6 un 7, **dadurch gekennzeichnet, dass** das erste Verschlusselement (35) eine als kegeldachförmigen Wetterschutz ausgebildete Abdeckhaube (36) umfasst, und Mittel (102,103) zum vertikalen Heben und zum Senken des Verschlusselementes (35) vorgesehen sind, wobei der Einfüllstutzen (3) den Rohrstutzen (40) zur koaxialen Aufnahme des Einsatzkörpers (45) aufweist, welcher auf der dem ersten Verschlusselement (35) zugewandten Seite einen an dem Auflagering (44) angeordneten und nach oben ragenden Kragen (104) für die in der in Umfangsrichtung orientierten Ausnehmung (38) angeordnete erste Dichtung (105) aufweist, und auf der dem zweiten Verschlusselement (60) zugewandten Seite die in Umfangsrichtung orientierte Ausnehmung (49) für die mit einer zirkulären Druckkammer (54) versehene zweite Dichtung (50) aufweist.

12. Schliesseinrichtung nach Anspruch 11, **dadurch gekennzeichnet, dass** das Verschlusselement (35) durch die Rückstellkraft einer Druckfeder (103) gegen den Kragen (104) des Auflagerings (44) drückbar und mittels eines Kurzhub-Pneumatikzylindes (102) relativ zu dem Auflagering (44) in Richtung des Schwenkarms (31) anhebbar ist.

13. Schliesseinrichtung nach Anspruch 11, **dadurch gekennzeichnet, dass** die in der Ausnehmung (49) des Einsatzkörpers (45) angeordnete zweite Dichtung (50) mehrere in Umfangsrichtung verteilt zueinander angeordnete und mit der Druckkammer (54) in Verbindung stehende Anschluss-Stutzen (55) aufweist, mittels welcher die Dichtung (50) an dem Einsatzkörper (45) des Rohrstutzens (40) befestigt ist.

14. Schliesseinrichtung nach Anspruch 12 oder 13, **dadurch gekennzeichnet, dass** die zweite Dichtung (50) auswechselbar in der Ausnehmung (49) des Einsatzkörpers (45) angeordnet ist.

15. Schliesseinrichtung nach Anspruch 12 und 13, **dadurch gekennzeichnet, dass** die zweite Dichtung (50) über mehrere in Umfangsrichtung verteilt zueinander angeordnete Anschlussglieder (27) an die Versorgungsleitung (20) angeschlossen ist.

16. Schliesseinrichtung nach Anspruch 11, **dadurch gekennzeichnet, dass** die in der Ausnehmung (38) des Verschlusselements (45) angeordnete erste Dichtung (105) eine zirkulär und im Profilquerschnitt quadratisch ausgebildete Dichtschnur ist.

## Claims

1. A closing device for a container (5) in particular situated on a rail or road vehicle (10) and implemented for loading with powdered or granular bulk goods, the closing device comprising a filler neck (3), which is provided with a through opening (4) and is mounted to the container and connected to the container interior (6), the closing device further comprising a pivot device (30), as well as a first closure element (35) and a second closure element (60) for exterior and interior closing or opening of the through opening (4), and wherein the closure elements (35, 60) are pivotable horizontally around a shared vertical axis (Z) of the pivot device (30), which is operationally linked to activatable drive means (65, 90), in relation to the through opening (4) of the filler neck (3), and a seal (50. 50') is situated at one end of the filler neck or at the corresponding closing element, **characterized in that** at least one seal having a pressure chamber (54), which is oriented around the circumference and is connected to at least one connection element (27, 28) and a supply line (20), which may be impinged with pressure in the closed position and may be relieved of pressure for the open position of the closure elements (35, 60).

2. The closing device according to Claim 1, **characterized by** a control unit (25), situated on the container (5) and activatable by a location-independent transmitter by transmitting a signal, which is operationally linked to the pivot device (30) for pivoting the two closure elements (35, 60) around the axis (Z).

3. The closing device according to Claim 1 or 2, **characterized by** two pivot arms (31, 61), situated at a distance to one another on an axle body (70) of the pivot device (30) and each implemented for mounting the two closure elements (35, 60), which are simultaneously pivotable around the vertical axis (Z) of the axle body (70) by a rotational drive (65) situated in the container interior (6).

4. The closing device according to Claim 1 or 2, **characterized in that** the two pivot arms (31, 61), each implemented for mounting two closing elements (35, 60), are mounted at a distance to each other on an axle body (70) of the pivot device (30) and are pivotable simultaneously around the vertical axis (Z) of the axle body (70) situated thereon by a drive (90) situated externally on the container (5)

5. The closing device according to Claim 4, **characterized in that** the drive (90) is implemented as a pressure cylinder which may be impinged and relieved.

6. The closing device according to one of Claims 1 through 5, **characterized in that** the filler neck (3) has a pipe neck (40) for coaxially receiving an insert body (45), which, on the side facing toward the first closure element (35), has a support ring (44) for a first seal (50', 105), and, on the side facing toward the second closure element (60), has a recess (49) oriented around the circumference for the second seal (50), which is provided with a circular pressure chamber (54).

7. The closing device according to Claim 6, **characterized in that** the first closure element (35) comprises a cover hood (36), implemented as a weather guard shaped like a conical roof, and a ring body (37), which, on the side facing toward the support ring (44), has a recess (38) oriented around the circumference for the first seal (50', 105), which is either provided with a circular pressure chamber (54) or is implemented as a square four-edge sealing cord.

8. The closing device according to Claim 6 or 7, **characterized in that** the seals (50, 50') provided with a pressure chamber (54) have multiple connection nozzles (55) situated distributed apart from one another around the circumference, using which the seals (50, 50') are fastened to the ring body (37) of the closure element (35) and/or to the insert body (45) of the pipe neck (40).

9. The closing device according to Claim 6 or 7, **characterized in that** the seals (50, 50', 105) are situated replaceably in the recess (38) of the ring body (37) and/or in the recess (49) of the insert body (45).

10. The closing device according to Claim 6 or 7, **characterized in that** the seals (50, 50') provided with a pressure chamber (54) are connected via multiple connection elements (27, 28), which are situated distributed apart from one another around the circumference, to the supply line (20).

11. The closing device according to Claims 6 and 7, **characterized in that** the first closure element (35) comprises a cover hood (36), implemented as a weather guard shaped like a conical roof, and means (102, 103) are provided for vertically raising and lowering the closure element (35), the filler neck (3) having the pipe neck (40) for coaxially receiving the insert body (45), which, on the side facing toward the first closure element (35) has a collar (104), situated on the support ring (44) and projecting upward, for the first seal (105) situated in the recess (38) oriented around the circumference, and, on the side facing toward the second closure element (60), has the recess (49) oriented around the circumference for the second seal (50) provided with a circular pressure chamber (54).

12. The closing device according to Claim 11, **characterized in that** the closure element (35) may be pressed against the collar (104) of the support ring (44) by the restoring force of a compression spring (103), and may be raised in relation to the support ring (44) in the direction of the pivot arm (31) using a short-stroke pneumatic cylinder (102).

13. The closing device according to Claim 11, **characterized in that** a second seal (50) situated in the recess (49) of the insert body (45) has multiple connection nozzles (55), which are situated distributed apart from one another around the circumference and are connected to the pressure chamber (54), using which the seal (50) is fastened to the insert body (45) of the pipe neck (40).

14. The closing device according to In 12 or 13, **characterized in that** the second seal (50) is situated replaceably in the recess (49) of the insert body (45)

15. The closing device according to Claims 12 and 13, **characterized in that** the second seal (50) is connected to the supply line (20) via multiple connection elements (27) situated distributed apart from one another around the circumference.

16. The closing device according to Claim 11, **characterized in that** the first seal (105) situated in the recess (38) of the closure element (45) is a circular sealing cord implemented as square in profile cross-section.

## Revendications

1. Dispositif de fermeture pour un conteneur (5) disposé en particulier sur un véhicule ferroviaire ou routier (10) et destiné au chargement de produits en vrac pulvérulents ou granuleux, lequel dispositif de fermeture comprend une tubulure de remplissage (3) munie d'une ouverture de passage (4) et est monté sur le conteneur (5) en communication avec l'intérieur du conteneur (6), le dispositif de fermeture présentant en outre un dispositif de pivotement (30) ainsi qu'un premier élément d'obturation (35) et un deuxième élément d'obturation (60) pour l'obturation ou l'ouverture sur l'extérieur et l'intérieur de l'ouverture de passage (4), et les éléments d'obturation (35,60) pouvant pivoter horizontalement par rapport à l'ouverture de passage (4) de la tubulure de remplissage (3) autour d'un axe vertical commun (Z) du dispositif de pivotement (30) en liaison active avec des moyens d'entraînement (65, 90) activables, et un joint (50, 50') étant disposé à chaque extrémité de la tubulure de remplissage et sur l'élément d'obturation correspondant, **caractérisé en ce qu'**au moins un joint présente une chambre de pression (54) orientée dans le sens de la circonférence et communiquant avec au moins un élément de raccordement (27, 28) et une ligne d'alimentation (20), qui peut être pressurisée dans la position de fermeture et dépressurisée dans la position d'ouverture des éléments d'obturation (35, 60).

2. Dispositif de fermeture selon la revendication 1, **caractérisé en ce qu'**il comporte une unité de commande (25) disposée sur le conteneur (5) et activable par un émetteur à positionnement indépendant par l'émission d'un signal, qui est en relation active avec le dispositif de pivotement (30) pour faire pivoter les deux éléments d'obturation (35, 60) autour de l'axe (Z).

3. Dispositif de fermeture selon les revendications 1 ou 2, **caractérisé en ce qu'**il comporte deux bras pivotants (31, 61) disposés à distance l'un de l'autre sur un corps d'axe (70) du dispositif de pivotement (30) et conçus pour supporter les deux éléments d'obturation (35, 60), qui peuvent être entraînés simultanément par un entraînement rotatif (65) disposé à l'intérieur du conteneur (6) en pivotement autour de l'axe vertical (Z) du corps d'axe (70).

4. Dispositif de fermeture selon les revendications 1 ou 2, **caractérisé en ce qu'**il comporte deux bras pivotants (31, 61) disposés à distance l'un de l'autre sur un corps d'axe (70) du dispositif de pivotement (30) et conçus pour supporter les deux éléments d'obturation (35, 60), qui peuvent être entraînés simultanément par un entraînement (90) disposé à l'extérieur sur le conteneur (5) en pivotement autour de l'axe vertical (Z) du corps d'axe (70).

5. Dispositif de fermeture selon la revendication 4, **caractérisé en ce que** l'entraînement (90) est conçu comme un vérin pouvant être pressurisé et dépressurisé.

6. Dispositif de fermeture selon l'une des revendications 1 à 5, **caractérisé en ce que** la tubulure de remplissage (3) est un piquage tubulaire (40) destiné à recevoir de façon coaxiale un insert (45) qui présente sur la face tournée vers le premier élément d'obturation (35) une bague d'appui (44) pour le premier joint (50', 105) et sur la face tournée vers le deuxième élément d'obturation (60) un creux (49) orienté dans le sens de la circonférence pour le deuxième joint (50) muni d'une chambre de pression circulaire (54).

7. Dispositif de fermeture selon la revendication 6, **caractérisé en ce que** le premier élément d'obturation (35) comprend un chapeau (36) conçu comme une protection conique contre les intempéries et un corps annulaire (37) qui présente du côté tourné vers la bague d'appui (44) un creux (38) orienté dans le sens de la circonférence pour le premier joint (50', 105), qui est soit muni d'une chambre de pression (54) circulaire, soit conformé comme un cordon d'étanchéité carré.

8. Dispositif de fermeture selon la revendication 6 ou 7, **caractérisé en ce que** les joints (50, 50') munis d'une chambre de pression (54) possèdent plusieurs tubulures de raccordement (55) réparties dans le sens de la circonférence, au moyen desquelles les joints (50, 50') sont fixés sur le corps annulaire (37) de l'élément d'obturation (35) ou sur l'insert (45) du piquage tubulaire (40).

9. Dispositif de fermeture selon la revendication 6 ou 7, **caractérisé en ce que** les joints (50, 50', 105) sont disposés de façon interchangeable dans le creux (38) du corps annulaire (37) ou dans le creux (49) de l'insert (45).

10. Dispositif de fermeture selon la revendication 6 ou 7, **caractérisé en ce que** les joints (50, 50') munis d'une chambre de pression (54) sont raccordés par plusieurs éléments de raccordement (27, 28) répartis dans le sens de la circonférence à la conduite d'alimentation (20).

11. Dispositif de fermeture selon l'une des revendications 6 et 7, **caractérisé en ce que** le premier élément d'obturation (35) comprend un chapeau (36) conçu comme une protection conique contre les intempéries et des moyens (102, 103) sont prévus pour lever et baisser verticalement l'élément d'obturation (35), la tubulure de remplissage (3) comportant le piquage tubulaire (40) pour le logement coaxial de l'insert (45), qui présente du côté tourné vers le premier élément d'obturation (35) un collet (104) disposé sur la bague d'appui (44) et dépassant vers le haut pour le premier joint (105) disposé dans le creux (38) orienté dans le sens de la circonférence, et sur le côté tourné vers le deuxième élément d'obturation (60) un creux (49) orienté dans le sens de la circonférence pour le deuxième joint (50) muni d'une chambre de pression circulaire (54).

12. Dispositif de fermeture selon la revendication 11, **caractérisé en ce que** l'élément d'obturation (35) peut être pressé contre le collet (104) de la bague d'appui (44) par la force de rappel d'un ressort de compression (103) et peut être levé au moyen d'un vérin pneumatique à course courte (102) par rapport à la bague d'appui (44) en direction du bras pivotant (31).

13. Dispositif de fermeture selon la revendication 11, **caractérisé en ce que** le deuxième joint (50) disposé dans le creux (49) de l'insert (45) présente plusieurs tubulures de raccordement (55) réparties dans le sens de la circonférence et communiquant avec la chambre de pression (54), au moyen desquelles le joint (50) est fixé à l'insert (45) du piquage tubulaire (40).

14. Dispositif de fermeture selon la revendication 12 ou 13, **caractérisé en ce que** le deuxième joint (50) est disposé de façon interchangeable dans le creux (49) de l'insert (45).

15. Dispositif de fermeture selon la revendication 12 et 13, **caractérisé en ce que** le deuxième joint (50) est raccordé à la conduite d'alimentation (20) par plusieurs éléments de raccordement (27) répartis dans le sens de la circonférence.

16. Dispositif de fermeture selon la revendication 11, **caractérisé en ce que** le premier joint (105) disposé dans le creux (38) de l'élément d'obturation (45) est un cordon d'étanchéité circulaire de section carrée de profil.
